# EUROPEAN PATENT SPECIFICATION

(11) **EP 1 650 904 B1**
(45) Date of publication and mention of the grant of the patent: **13.06.2007**
(21) Application number: 04105261.4
(22) Date of filing: 22.10.2004
(51) Int. Cl.: H04L 12/56

(54) **Method for transferring data in a wireless device employing different protocol stacks**
Verfahren zur Datenübertragung innerhalb eines schnurlosen Gerätes mit verschiedenen Protokollstapeln
Procédé permettant de transférer des données dans un dispositif sans fil avec différentes piles de protocoles

(43) Date of publication of application: 26.04.2006
(73) Proprietor: Research In Motion Limited, Waterloo, Ontario N2L 3W8 (CA)
(72) Inventor: Gibbs, Fraser, Waterloo, Ontario N2V 1M3 (CA); Wang, Charles 300 Regina Street North, Waterloo, Ontario N2J 3B8 (CA)
(74) Representative: Rickard, David John

(56) References cited:
- EP-A- 0 572 865
- EP-A- 1 422 882
- WO-A-01/78286
- WO-A-20/04021620
- WO-A-20/04054180
- 3GPP: "3rd Generation Partnership Project; Technical Specification Group Core Network; Mobile Station (MS) - Serving GPRS Support NOde (SGSN); Subnetwork Dependent Convergence Protocol (SNDCP) (Release 6)" 3GPP TS44.065 V6.3.0, [Online] September 2004 (2004-09), pages 1-50, XP002321463 Retrieved from the Internet: URL:http://www.3gpp.org/ftp/Specs/archive/ 44_series/44.065/> [retrieved on 2005-03-17]
- "Digital cellular telecommunications system (Phase 2+); Mobile Station Serving GPRS Support Node (MS-SGSN) Logical Link Control (LLC) Layer Specification (3GPP TS 44.064 version 5.1.0 Release 5); ETSI TS 144 064" ETSI STANDARDS, EUROPEAN TELECOMMUNICATIONS STANDARDS INSTITUTE, SOPHIA-ANTIPO, FR, vol. 3-CN1, no. V510, March 2002 (2002-03), XP014010613 ISSN: 0000-0001
- 3GPP: "3rd Generation Partnership Project; Technical Spe3cification group Radio Access Network; Packet data Convergence Protocol (PDCP) Specification (Release 6)" 3GPP TS 25.323 V6.0.0, [Online] December 2003 (2003-12), pages 1-22, XP002321465 Retrieved from the Internet: URL:http://www.3gpp.org/ftp/Specs/archive/ 25_series/25.323/> [retrieved on 2005-03-17]
- 3GPP: "3rd Generation Partnership Project; Technical Specification Group Radio Access Network; Radio Link Control (RLC) protocol specification (Release 6)" 3GPP TS 25.322 V6.1.0, [Online] June 2004 (2004-06), pages 1-78, XP002321466 Retrieved from the Internet: URL:http://www.3gpp.org/ftp/Specs/archive/ 25_series/25.322/> [retrieved on 2005-03-17]
- 3GPP: "3rd Generation Partnership Project; Technical Specification Group Radio Access Network; Medium Access Control (MAC) protocol specification (Release 6)" 3GPP TS 25.321 V6.2.0, [Online] June 2004 (2004-06), pages 1-61, XP002321467 Retrieved from the Internet: URL:http://www.3gpp.org/ftp/Specs/archive/ 25_series/25.321/> [retrieved on 2005-03-17]

## Description

The present invention concerns a method for transferring data in a wireless network and particularly to a method for transferring data by a mobile device capable of being operated in accordance with at least two wireless access technologies of said wireless network.

Mobile wireless communications systems have developed from first generation analogue based mobile wireless systems to second generation digital systems such as the Global System for Mobile Communications (GSM). Now, the so-called third generation mobile communications system is being evolved. This is a next generation global mobile communications system that is generally based on the core network technology of GSM but employing a distinct wireless access technology. Various telecommunications standards bodies and telecommunications equipment vendors from around the world have agreed to collaborate on what is known as the Third Generation Partnership Project (3GPP). The 3GPP encompasses a number of research fields relating to development of the Universal Mobile Telecommunications System (UMTS). UMTS is the European form of the third generation mobile communications system.

GSM was developed as a voice based mobile wireless communications technology. Some years ago it was enhanced by the addition of a data technology known as General Packet Radio Service (GPRS) which enables GSM mobile devices (handsets) to send and receive packet based messages.

UMTS is a new wireless access technology that is quite different and thus generally incompatible with GSM/GPRS but which affords considerably higher data rates than GPRS. However, because of the high capital costs of installing a replacement UMTS system, such systems are gradually being deployed in co-existence with the already installed GSM systems. As such, for some time to come, mobile wireless communications systems will consist of both GSM/GPRS and UMTS services with many areas supporting only GSM/GPRS. Consequently, it is necessary that mobile devices support both technologies and be able to switch between these in either direction. Only one of the the technologies is active at any time for a connection although handover between technologies for a currently active connection is enabled.

The 3GPP specifications for GPRS/UMTS describe how data packets should be transferred on each technology and when a switch between technologies should occur for a packet data (i.e. packet switched) connection. In most modes of operation, the specifications describe data being transferred through the Internet Protocol (1P) layer of the protocol stack of the active technology path with no simple process for determining whether data transmission through the stack is successful. If a data packet does not get transmitted by a lower layer of the active protocol stack, which occurs frequently due to poor radio conditions, for example, and, if a technology switch is then effected, such data packet may be lost in the initially active data path. This is particularly egregious for delay sensitive packet data connections such as conversational class real time services, e.g. video telephony.

The 3GPP specifications do describe for GPRS and UMTS a number of modes of operation comprising one or more of a "transparent mode", an "unacknowledged mode" and an "acknowledged mode". The acknowledged mode of operation does involve a packet transmission acknowledgement process. However, the described process involves latency issues for delay sensitive services and thus is a rarely employed mode of operation.

WO01/078286 teaches how to unambiguously convert 16 bit PDCP sequence numbers to 8 bit SNDCP numbers in the event of a handover from at least UMTS to GPRS in a dual technology mobile device operating in the acknowledged mode. It achieves this by restricting the PDCP 16 bit number space on handover. In the acknowledged mode, the sequence number encapsulated in a data packet transmitted from the mobile device to the network over a packet connection is returned to the mobile device from the network by way of an acknowledgement from the network-of successful transmission of the packet.

EP1422882 deals with GSM/GPRS only and thus discloses a wireless device capable of being operated in accordance with a single wireless access technology of its associated network. It teaches a process of recovering data when the network has specifically reset the LLC entity. It does not teach any process of recovering data during a radio access technology change in a wireless device capable of being operated in accordance two wireless access technologies of a wireless network.

Preferably the invention to mitigates and/or obviates problems associated with the transmission of data packets within mobile devices in the existing GPRS and UMTS technologies as currently specified in the 3GPP specifications.

### GENERAL

Preferably, the invention may also provide a method for acknowledging packet transmission within the protocol stack of the currently active data path for at least the unacknowledged mode of operation of a GPRS/UMTS mobile device.

In a first main aspect, the present invention provides a method of transferring data packets in a wireless device capable of being operated in accordance with two wireless access technologies of a wireless network, the method comprising the steps of: storing a copy of a data packet; transferring said data packet from a first layer common to respective protocol stacks of two wireless technology paths employed by the device for respective packet connections with the network to a second, lower layer of one of said stacks; and processing said stored copy of the data packet according to an indication from the second layer of safe receipt of the data packet or an indication that a packet connection associated with the packet transfer process is to be terminated or an indication that a packet connection associated with the packet transfer process is to be switched to a new packet connection path, wherein processing said stored copy of the data packet comprises deleting said copy of the packet or transferring it to said new packet connection path.

In a second main aspect, the present invention provides a wireless device for transferring data packets over a packet connection with a wireless network, said device being operable in accordance with two wireless access technologies of the wireless network, comprising: means for storing a copy of a data packet; means for transferring said data packet from a first layer common to respective protocol stacks of two wireless technology paths employed by the device for respective packet connections with the network to a second, lower layer of one of said stacks; and means for processing said stored copy of the data packet according to an indication from the second layer of safe receipt of the data packet or an indication that a packet connection associated with the packet transfer process is to be terminated or an indication that a packet connection associated with the packet transfer process is to be switched to a new packet connection path, wherein processing said stored copy of the data packet comprises deleting said copy of the packet or transferring it to said new packet connection path.

In a third main aspect, the present invention provides a computer readable storage medium containing code means for a wireless device for carrying out the steps of the method of the first main aspect of the invention.

In a fourth main aspect, the present invention provides a system comprising an electronic device for transferring packets on a packet connection through a wireless network, said wireless network including two wireless access networks of different technologies, wherein said device comprises the device of the second main aspect of the invention.

Further aspects and features of the present invention will be apparent from the appended claims.
Figure 1 is a block diagram which illustrates components of a mobile device capable of being operated in accordance with GSM and UMTS access technologies of a wireless access communication network and the network within which the mobile device operates;
Figure 2 is a schematic diagram illustrating in greater detail components of the mobile device of Figure 1;
Figure 3 is a protocol stack diagram for packet transmission in GSM/GPRS/UMTS wireless communications system; and
Figure 4 is a diagram of that part of the protocol stack of figure 3 implemented by the mobile device of figures 1 and 2.

### Description of Preferred Embodiments.

The foregoing and further features of the present invention will be more readily understood from a description of a preferred embodiment, by way of example thereof, with reference to the accompanying drawings.

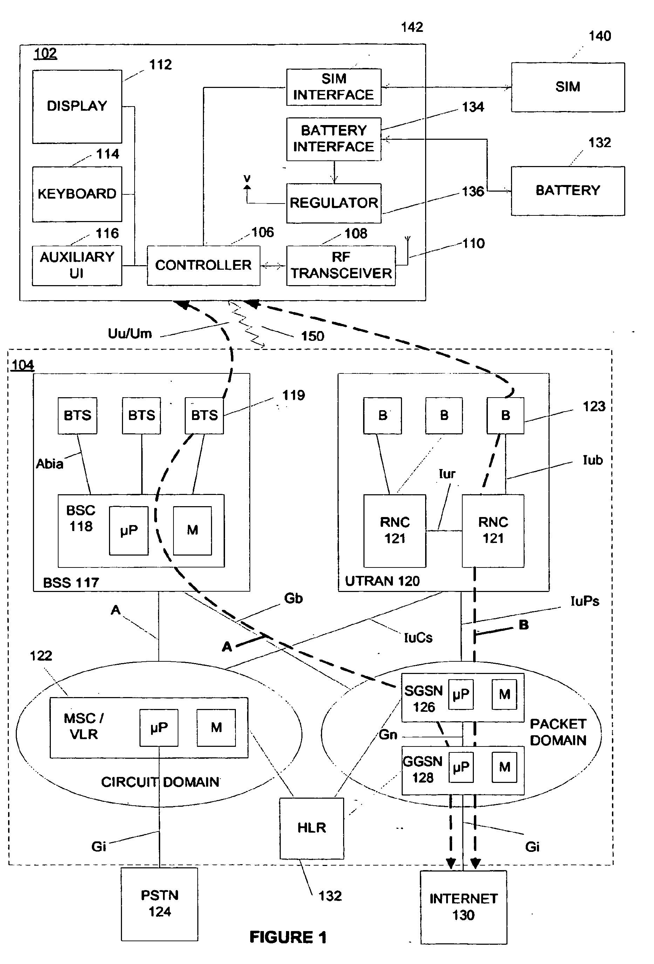

FIG. 1 is a block diagram of a communication system 100, which includes a mobile device 102 that communicates through a wireless communication network 104. Mobile device 102 preferably includes a visual display 112, a keyboard 114, and perhaps one or more auxiliary user interfaces (UI) 116, each of which is coupled to a controller 106. Controller 106 is also coupled to radio frequency (RF) transceiver circuitry 108 and an antenna 110.

Typically, controller 106 is embodied as a central processing unit (CPU), which runs operating system software in a memory component (not shown). Controller 106 will normally control overall operation of mobile device 102, whereas signal processing operations associated with communication functions are typically performed in RF transceiver circuitry 108. Controller 106 interfaces with device display 112 to display received information, stored information, user inputs, and the like. Keyboard 114, which may be a telephone type keypad or full alphanumeric keyboard, is normally provided for entering data for storage in mobile device 102, information for transmission to network 104, a telephone number to place a telephone call, commands to be executed on mobile device 102, and possibly other or different user inputs.

Mobile device 102 sends communication signals to and receives communication signals from network 104 over a wireless link 150 via antenna 110. RF transceiver circuitry 108 performs functions such as modulation/demodulation and possibly encoding/decoding and encryption/decryption. It will be apparent to those skilled in art that RF transceiver circuitry 108 will be adapted to particular wireless network or networks in which mobile device 102 is intended to operate.

Mobile device 102 includes a battery interface 134 for receiving one or more rechargeable batteries 132. Battery 132 provides electrical power to electrical circuitry in mobile device 102, and battery interface 132 provides for a mechanical and electrical connection for battery 132. Battery interface 132 is coupled to a regulator 136, which regulates power to the device. When mobile device 102 is fully operational, an RF transmitter of RF transceiver circuitry 108 is typically keyed or turned on only when it is sending to a network, and is otherwise turned off to conserve resources. Similarly, an RF receiver of RF transceiver circuitry 108 is typically periodically turned off to conserve power until it is needed to receive signals or information (if at all) during designated time periods.

Mobile device 102 operates using a Subscriber Identity Module (SIM) 140 which is connected to or inserted in mobile device 102 at a SIM interface 142. SIM 140 is one type of a conventional "smart card" used to identify an end user (or subscriber) of mobile device 102 and to personalize the device, among other things. Without SIM 140, the mobile device terminal is not fully operational for communication through wireless network 104. By inserting SIM 140 into mobile device 102, an end user can have access to any and all of his/her subscribed services. SIM 140 generally includes a processor and memory for storing information. Since SIM 140 is coupled to SIM interface 142, it is coupled to controller 106 through communication lines 144. In order to identify the subscriber, SIM 140 contains some user parameters such as an International Mobile Subscriber Identity (IMSI). An advantage of using SIM 140 is that end users are not necessarily bound by any single physical mobile device. SIM 140 may store additional user information for the mobile device as well, including datebook (or calendar) information and recent call information.

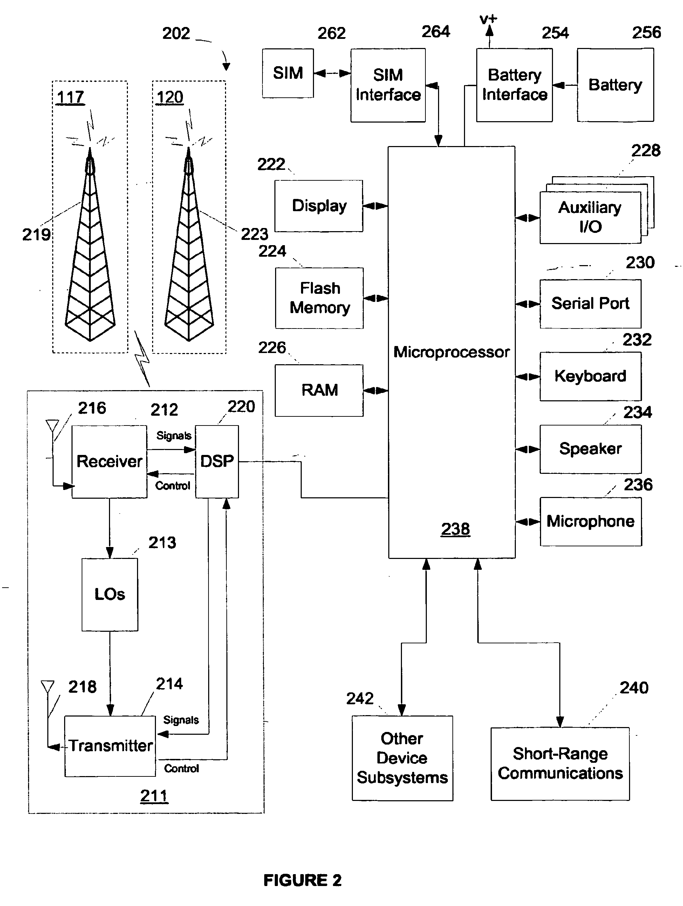

Mobile device 102 may consist of a single unit, such as a data communication device, a cellular telephone, a multiple-function communication device with data and voice communication capabilities, a personal digital assistant (PDA) enabled for wireless communication, or a computer incorporating an internal modem. Alternatively, mobile device 102 may be a multiple-module unit comprising a plurality of separate components, including but in no way limited to a computer or other device connected to a wireless modem. In particular, for example, in the mobile device block diagram of FIG. 1, RF transceiver circuitry 108 and antenna 110 may be implemented as a radio modem unit that may be inserted into a port on a laptop computer. In this case, the laptop computer would include display 112, keyboard 114, one or more auxiliary UIs 116, and controller 106 embodied as the computer's CPU. It is also contemplated that a computer or other equipment not normally capable of wireless communication may be adapted to connect to and effectively assume control of RF transceiver circuitry 108 and antenna 110 of a single-unit device such as one of those described above. Such a mobile device 102 may have a more particular implementation as described later in relation to mobile device 202 of FIG. 2.

Mobile device 102 communicates in and through wireless communication network 104. In the embodiment of FIG. 1, wireless network 104 is configured as a dual mode wireless access network in accordance with both of the Global Systems for Mobile (GSM) Communications/General Packet Radio Service (GPRS) and Universal Mobile Telecommunications System technologies. Dual mode wireless network 104 includes a GSM base station subsystem (BSS) 117 and a UMTS Terrestrial Radio Access Network (UTRAN) 120 as separate wireless access networks for the mobile device 102, a Mobile Switching Center (MSC) 122 (which may include a Visitor Location Register for roaming mobile devices), a Home Location Register (HLR) 132, a Serving General Packet Radio Service (GPRS) Support Node (SGSN) 126, and a Gateway GPRS Support Node (GGSN) 128. MSC 122 is coupled to both of the BSS 117 and UTRAN 120 and to a landline network, such as a Public Switched Telephone Network (PSTN) 124. SGSN 126 is coupled to both BSS 117 and UTRAN 120 and to GGSN 128, which is in turn coupled to a public or private data network 130 (such as the Internet). HLR 132 is coupled to MSC 122, SGSN 126, and GGSN 128.

BSS 117 comprises at least one Base Station Controller (BSC) 118 which serves a plurality of Base Transceiver Stations (BTSs) 119 as will be familiar to the skilled artisan. UTRAN 120 comprises a number of Radio Network Controllers (RNCs) 121 which each serve respective Node Bs 123, again in a manner familiar to the skilled artisan. It will be understood that in UMTS parlance mobile devices 102 are referred to as User Equipments (UEs), but, for convenience, such devices will continue to be referred to as mobile devices in the following description. Also shown in FIG. 1 are the designations of the interfaces between the various components of the wireless access network 104 using the recognized designations from the GPRS and UMTS specifications.

The fixed BTSs 119 provide wireless network coverage for respective coverage areas commonly referred to as "cells". Each BTS 119 transmits communication signals to and receives communication signals from mobile devices 102 within its cell. Each BTS 119 normally performs such functions as modulation and possibly encoding and/or encryption of signals to be transmitted to the mobile devices 102 in accordance GSM/GPRS protocols and parameters, under control of its respective BSC 118. Each BTS 119 similarly demodulates and possibly decodes and decrypts, if necessary, any communication signals received from mobile devices 102 within its cell.

Node Bs 123 of UTRAN 120 similarly provide wireless network coverage for mobile devices (102) within their respective cells under control of their respective RNCs 121 in accordance with UMTS protocols and parameters.

The wireless link 150 of FIG. 1 represents one or more different channels, typically different radio frequency (RF) channels for GSM/GPRS and radio bearer or logical channels for UMTS, between mobile devices 102 and the BSS 117 and UTRAN 120. Those skilled in art will appreciate that a dual mode wireless network 104 in actual practice may include hundreds of cells, each served by a BTS 119 and/or Node B 123, depending upon desired overall expanse of network coverage. All pertinent components may be connected by multiple switches and routers (not shown), controlled by multiple network controllers.

For all mobile devices 102 registered with a network operator, permanent data (such as mobile device 102 user's profile) as well as temporary data (such as mobile device's 102 current location) are stored in HLR 132. In case of a voice call to mobile device 102, HLR 132 is queried to determine the current location of mobile device 102. The VLR of MSC 122 is responsible for a group of location areas and stores the data of those mobile devices that are currently in its area of responsibility. This includes parts of the permanent mobile device data that have been transmitted from HLR 132 to the VLR for faster access. However, the VLR of MSC 122 may also assign and store local data, such as temporary identifications. Optionally, the VLR of MSC 122 can be enhanced for more efficient co-ordination of GPRS and non-GPRS services and functionality (e.g. paging for circuit-switched calls which can be performed more efficiently via SGSN 126, and combined GPRS and non-GPRS location updates).

Serving GPRS Support Node (SGSN) 126 is at the same hierarchical level as MSC 122 and keeps track of the individual locations of mobile devices. SGSN 126 also performs security functions and access control. Gateway GPRS Support Node (GGSN) 128 provides interworking with external packet-switched networks and is connected with SGSNs (such as SGSN 126) via an IP-based GPRS backbone network. SGSN 126 performs authentication and cipher setting procedures based on the same algorithms, keys, and criteria as in existing GSM and UMTS as appropriate. In conventional operation, cell selection may be performed autonomously by mobile device 102 or by the BSC 118 and/or the RNC 121 responsible for the device 102 instructing it to select a particular cell. Mobile device 102 informs wireless network 104 when it reselects another cell or group of cells, known as a routing area.

In order to access GPRS services, mobile device 102 first makes its presence known to wireless network 104 by performing what is known as a GPRS "attach". This operation establishes a logical link between mobile device 102 and SGSN 126 and makes mobile device 102 available to receive, for example, pages via SGSN, notifications of incoming data, or SMS messages over GPRS. In order to send and receive data, mobile device 102 assists in activating the packet data address that it wants to use. This operation makes mobile device 102 known to GGSN 128 such that interworking with external data networks can thereafter commence. User data may be transferred transparently between mobile device 102 and the external data networks using, for example, encapsulation and tunneling. Data packets are equipped with GPRS-specific protocol information and transferred between mobile device 102 and GGSN 128 via either the BSS 1 17 or UTRAN 120.

Those skilled in art will appreciate that a wireless network may be connected to other systems, possibly including other networks, not explicitly shown in FIG. 1. A network will normally be transmitting at very least some sort of paging and system information on an ongoing basis, even if there is no actual packet data exchanged. Although the network consists of many parts, these parts all work together to result in certain behaviours at the wireless link.

FIG. 2 is a detailed block diagram of a mobile device 202 (e.g. mobile device 102 of FIG. 1). Mobile device 202 is preferably a two-way communication device having at least voice and advanced data communication capabilities, including the capability to communicate with other computer systems. Depending on the functionality provided by mobile device 202, it may be referred to as a data messaging device, a two-way pager, a cellular telephone with data messaging capabilities, a wireless Internet appliance, or a data communication device (with or without telephony capabilities). Mobile device 202 may communicate with any one of a plurality of BTSs 219 and/or Node Bs 223 within its geographic coverage area.

Mobile device 202 will normally incorporate a communication subsystem 211, which includes a receiver 212, a transmitter 214, and associated components, such as one or more (preferably embedded or internal) antenna elements 216 and 218, local oscillators (LOs) 213, and a processing module such as a digital signal processor (DSP) 220. Communication subsystem 211 is analogous to RF transceiver circuitry 108 and antenna 110 shown in FIG. 1. As will be apparent to those skilled in field of communications, particular design of communication subsystem 211 depends on the communication network in which mobile device 202 is intended to operate.

Mobile device 202 may send and receive communication signals over the network after required network registration or activation procedures have been completed. Signals received by antenna 216 through the network are input to receiver 212, which may perform such common receiver functions as signal amplification, frequency down conversion, filtering, channel selection, and the like, and in example shown in FIG. 2, analog-to-digital (A/D) conversion. A/D conversion of a received signal allows more complex communication functions such as demodulation and decoding to be performed in DSP 220. In a similar manner, signals to be transmitted are processed, including modulation and encoding, for example, by DSP 220. These DSP-processed signals are input to transmitter 214 for digital-to-analog (D/A) conversion, frequency up conversion, filtering, amplification and transmission over communication network via antenna 218. DSP 220 not only processes communication signals, but also provides for receiver and transmitter control. For example, the gains applied to communication signals in receiver 212 and transmitter 214 may be adaptively controlled through automatic gain control algorithms implemented in DSP 220.

Network access is associated with a subscriber or user of mobile device 202, and therefore mobile device 202 requires a Subscriber Identity Module or "SIM" card 262 to be inserted in a SIM interface 264 in order to operate in the network. SIM 262 includes those features described in relation to FIG. 1. Mobile device 202 is a battery-powered device so it also includes a battery interface 254 for receiving one or more rechargeable batteries 256. Such a battery 256 provides electrical power to most, if not all electrical circuitry in mobile device 202, and battery interface 254 provides for a mechanical and electrical connection for it. The battery interface 254 is coupled to a regulator (not shown), which provides power V+ to all of the circuitry.

Mobile device 202 includes a microprocessor 238 (which is one implementation of controller 106 of FIG. 1), which controls overall operation of mobile device 202. Communication functions, including at least data and voice communications, are performed through communication subsystem 211. Microprocessor 238 also interacts with additional device subsystems such as a display 222, a flash memory 224, a random access memory (RAM) 226, auxiliary input/output (I/O) subsystems 228, a serial port 230, a keyboard 232, a speaker 234, a microphone 236, a short-range communications subsystem 240, and any other device subsystems generally designated at 242. Some of the subsystems shown in FIG. 2 perform communication-related functions, whereas other subsystems may provide "resident" or on-device functions. Notably, some subsystems, such as keyboard 232 and display 222, for example, may be used for both communication-related functions, such as entering a text message for transmission over a communication network, and device-resident functions such as a calculator or task list. Operating system software used by microprocessor 238 is preferably stored in a persistent store such as flash memory 224, which may alternatively be a read-only memory (ROM) or similar storage element (not shown). Those skilled in the art will appreciate that the operating system, specific device applications, or parts thereof, may be temporarily loaded into a volatile store such as RAM 226.

Microprocessor 238, in addition to its operating system functions, preferably enables execution of software applications on mobile device 202. A predetermined set of applications which control basic device operations, including at least data and voice communication applications (such as a network reestablishment scheme), will normally be installed on mobile device 202 during its manufacture. A preferred application that may be loaded onto mobile device 202 may be a personal information manager (PIM) application having the ability to organize and manage data items relating to user such as, but not limited to, e-mail, calendar events, voice mails, appointments, and task items. Naturally, one or more memory stores are available on mobile device 202 and SIM 256 to facilitate storage of PIM data items and other information.

The PIM application preferably has the ability to send and receive data items via the wireless network. In a preferred embodiment, PIM data items are seamlessly integrated, synchronized, and updated via the wireless network, with the mobile device user's corresponding data items stored and/or associated with a host computer system thereby creating a mirrored host computer on mobile device 202 with respect to such items. This is especially advantageous where the host computer system is the mobile device user's office computer system. Additional applications may also be loaded onto mobile device 202 through the communications network, an auxiliary I/O subsystem 228, serial port 230, short-range communications subsystem 240, or any other suitable subsystem 242, and installed by a user in RAM 226 or preferably a non-volatile store (not shown) for execution by microprocessor 238. Such flexibility in application installation increases the functionality of mobile device 202 and may provide enhanced on-device functions, communication-related functions, or both. For example, secure communication applications may enable electronic commerce functions and other such financial transactions to be performed using mobile device 202.

In a data communication mode, a received signal such as a text message, an e-mail message, or web page download will be processed by communication subsystem 211 and input to microprocessor 238. Microprocessor 238 will preferably further process the signal for output to display 222 or alternatively to auxiliary I/O device 228. A user of mobile device 202 may also compose data items, such as e-mail messages, for example, using keyboard 232 in conjunction with display 222 and possibly auxiliary I/O device 228. Keyboard 232 is preferably a complete alphanumeric keyboard and/or telephone-type keypad. These composed items may be transmitted over a communication network through communication subsystem 211.

For voice communications, the overall operation of mobile device 202 is substantially similar, except that the received signals would be output to speaker 234 and signals for transmission would be generated by microphone 236. Alternative voice or audio I/O subsystems, such as a voice message recording subsystem, may also be implemented on mobile device 202. Although voice or audio signal output is preferably accomplished primarily through speaker 234, display 222 may also be used to provide an indication of the identity of a calling party, duration of a voice call, or other voice call related information, as some examples.

Serial port 230 in FIG. 2 is normally implemented in a personal digital assistant (PDA)-type communication device for which synchronization with a user's desktop computer is a desirable, albeit optional, component. Serial port 230 enables a user to set preferences through an external device or software application and extends the capabilities of mobile device 202 by providing for information or software downloads to mobile device 202 other than through a wireless communication network. The alternate download path may, for example, be used to load an encryption key onto mobile device 202 through a direct and thus reliable and trusted connection to thereby provide secure device communication.

Short-range communications subsystem 240 of FIG. 2 is an additional optional component which provides for communication between mobile device 202 and different systems or devices, which need not necessarily be similar devices. For example, subsystem 240 may include an infrared device and associated circuits and components, or a BluetoothTM communication module to provide for communication with similarly-enabled systems and devices. BluetoothTM is a registered trademark of Bluetooth SIG, Inc.

Mobile device 102, 202 is capable of communicating with a public or private data network such as the Internet 130 via either a GPRS access part 117 of the wireless network 104 or a UMTS access part 120 of the network 104 dependent on which cell or cells it is located in. Only one of the access technologies is operated within the mobile device at any time.

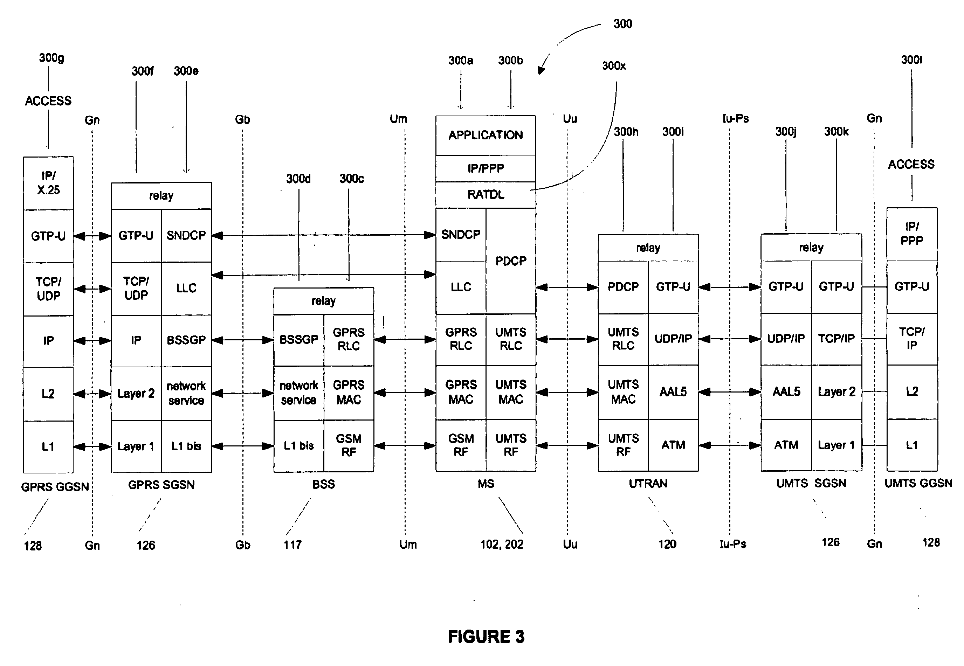

FIG. 3 is a protocol stack diagram 300 illustrating the protocol stacks 300a-1 implemented by components 102, 202, 117, 120, 126, 128 of the wireless network 104 for transferring data packets between the mobile device 102, 202 and a data network such as the Internet 130. The protocol stack diagram 300 comprises two halves, a first half 300a,c-g representative of a data path (arrowed line A in FIG.1) formed through the GPRS access part of the wireless network 104 and a second half 300b,h-1 representative of a data path (arrowed line B in FIG.1) through a UMTS access part of the wireless network 104. The diagram illustrated in FIG. 3 will be familiar to a skilled artisan save for the "RATDL" (Radio Access Technology De-multiplexing Layer) which will be described in more detail below. The operation of the protocol stacks 300a-1 save for the RADTL 300x is in accordance with the 3GPP specifications and need not be explained in detail here. The protocol stack diagram 300 also carries the interface designations for GPRS/UMTS which map onto those included in the system diagram of FIG. 1.

It will be appreciated that each of the components of the wireless network 104 have respective memory devices (M) and microprocessor devices (µP) for storing and executing program code for processing data packets in accordance with their respective protocol stacks 300a-1.

The following acronyms are utilised in the protocol stack diagram of FIG. 3:
GTP = GPRS Tunnelling Protocol
TCP = Transfer Control Protocol
UDP = User Datagram Protocol
IP = Internet Protocol
SNDCP = SubNetwork Dependent Convergent Protocol
LLC = Logical Link Control
BSSGP = Base Station Subsystem GPRS Protocol
RLC = Radio Link Control
MAC = Media Access Control
PDCP = Packet Data Convergence Protocol
ATM = Asynchronous Transfer Mode
AAL2/5 = ATM Adaptation Layer 2/5

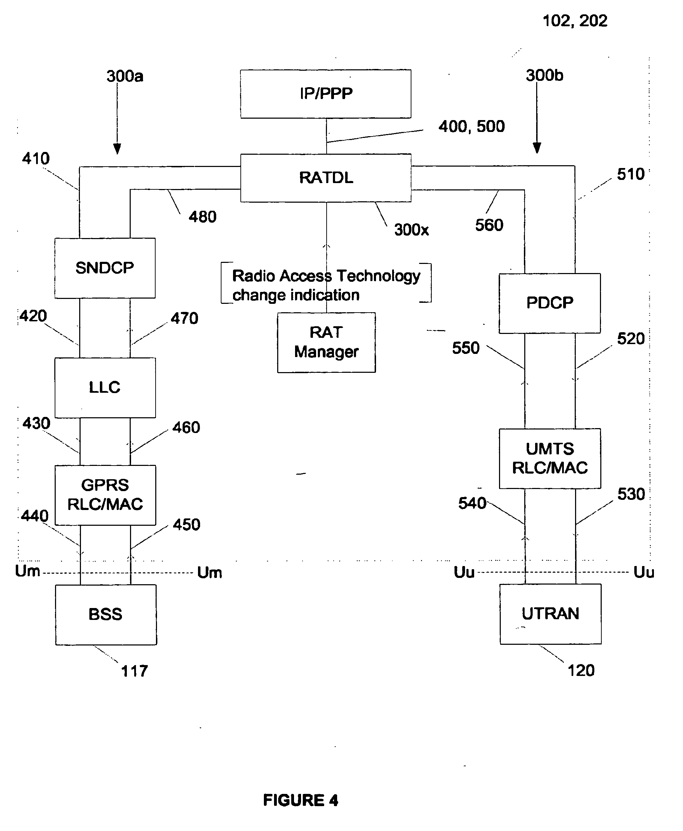

Referring again to FIG. 3 and also to FIG. 4, the RATDL 300x comprises a protocol (software) layer added to the highest common point of the two protocol stacks 300a,b implemented separately by the mobile device 102, 202 for GPRS and UMTS. The RADTL 300x may comprise a separate protocol layer as illustrated or may be combined with the SNDCP layer of the mobile device protocol stack 300a for the GPRS data path and with the PDCP layer of the mobile device protocol stack 300b for the UMTS data path. The RATDL 300x may be embodied in a separate Radio Access Technology (RAT) module within the mobile device 102, 202 but, in a preferred arrangement, is implemented as software stored in the memory 224 of the device and executed by the processor 238 thereof.

The RAT module manages data packets (referred to herein as network Protocol Data Units (N-PDUs)) being transmitted by the mobile device through a selected one of the two possible wireless access technology paths respectively represented by the two protocol stacks 300a,b of the mobile device 102, 202 by receiving and buffering N-PDUs to be transmitted. The RAT module stores copies of transmitted N-PDUs in the RAM 226 or other memory component of the mobile device 202. Upon receipt from at least one lower layer in the currently active protocol stack of confirmation of successful transmission of a N-PDU by that layer to a lower layer, the RAT module removes the stored copy of that N-PDU from the RAM 226. However, in the event of a technology switch in the data path, the RAT module transfers any unsuccessfully transmitted N-PDUs to the transmit queue of the newly initiated active protocol stack, thereby eliminating or at least substantially reducing the likelihood of data packets being lost on the occurrence of a data path technology change.

The implementation of this process in the GPRS protocol stack 300a is described below with reference to FIG. 4. In a first step 400, where the RAT module has data (normally IP data packets) for transmission from the mobile device 102, 202 to the wireless network 104 through the BSS 117 or UTRAN 120, it processes each N-PDU in the RATDL layer 300x. At this layer, a copy of the N-PDU is stored prior to transmission. Also, the N-PDU is assigned an identifier PDU_ID. The identifier is preferably unique to that N-PDU and is stored in a memory component, e.g. RAM 226, of the mobile device. The identifier may comprise a number relating to a count of N-PDUs received, e.g. the Nth N-PDU is assigned the identifier "N" or its indexed position in a table or its address in memory.

In a next step 410, since (in this example) the current cell in which the mobile device is located is a GPRS cell, the N-PDU is transferred down the GPRS protocol stack 300a. This commences with the RATDL passing the N-PDU together with its identifier PDU_ID to the SNDCP layer. SNDCP may segment the PDU into a number of smaller packets (referred herein as SN_PDUs) and, as such, program code for implementing the SNDCP is arranged to maintain a relationship between the new smaller SN_PDUs and the PDU_ID in order that it can subsequently be determined whether the entire original N-PDU has been successfully transmitted by that layer to a lower layer. The correspondence between the number of SN_PDUs and the original N-PDU may be stored in a look-up table maintained in the mobile device RAM 226 by associating SNDCP identifiers (SN_PDU_IDs) with the PDU_ID.

In a next step 420, the SNDCP layer passes the SN_PDUs to the LLC layer along with their respective SN_PDU_IDs identifiers, which each uniquely identifies its respective SN_PDU, whilst maintaining a record of the correspondence between said SN_PDU_IDs and PDU_ID. It should be noted that if the SNDCP layer is operating in acknowledged mode, the mobile device does receive an acknowledgement from the network of successful transmission of a last received N-PDU on the occurrence of a technology path change. However, the SNDCP acknowledged mode is rarely used or even supported in mobile devices and networks. The present invention is particularly, but not exclusively, directed to use in the more common unacknowledged mode of operation of the SNDCP layer that does not require extra communication with the network thus avoiding latency issues.

In a next step 430, the LLC layer packetizes the SN_PDUs in a manner consistent with the 3GPP specifications, and transfers them to the RLC/MAC layer along with their unique SN_PDU_IDs.

At 440, the RLC/MAC layer, provided wireless interface conditions allow, transfers the packets it receives from the LLC layer over the wireless interface 150 to the network 104. If operating in an unacknowledged mode, meaning an acknowledgement of transfer of the packet to the network 104 is not expected from the network 104, then the process proceeds to step 460.

If, however, the RLC/MAC layer is operating in the acknowledged mode, it waits at step 450 for an acknowledgement from the network 104 of receipt of a transmitted packet in accordance with the mechanisms described in the 3GPP specifications. When the network 104 receives the packet it returns an acknowledgement to the RLC/MAC layer. This acknowledgement from the network does confirm successful transmission of N-PDUs. However, the current 3GPP specifications do not describe any method for transferring unacknowledged PDUs to a new access technology.

At step 460, the RLC/MAC layer returns to the LLC layer each of the SN_PDU_IDS as confirmation of successful transfer by the RLC/MAC layer of the SN_PDUs to the network 104.

At step 470, the LLC layer forwards each of the SN_PDU_IDs to the SNDCP layer as confirmation of transmission of the SN_PDU packets at the LLC layer.

Finally, at step 480, the SNDCP layer on receiving all of the SN_PDU_IDs corresponding to the PDU_ID of the original N-PDU, returns the PDU_ID to the RATDL as confirmation of successful transmission of the N-PDU by the lower layers of the GPRS protocol stack 300a. The RATDL then discards the stored copy of the original PDU as it has been successfully transferred.

The above process is repeated for each N-PDU being transmitted by the mobile device 102, 202 to the network 104 and continues until the packet connection is terminated or until a data path technology change is required as a result of the mobile device moving to a new cell, for example, thereby initiating a hand-off process.

In the event that the RATDL does not receive the PDU_ID from the SNDCP layer, it can be concluded that transmission by at least one lower layer of the GPRS protocol stack was unsuccessful. This mechanism is primarily intended to allow the RATDL to forward to the transmit queue of a newly initiated data path any stored N-PDU deemed not to have been successfully transferred by a lower protocol layer. However, it could also be employed as a retransmit packet (N-PDU) mechanism within a currently active data path whereby, if, after a predetermined time-out period the RADTL has not received the PDU_ID from the SNDCP layer, the RATDL retransmits the N-PDU and associates with it a new identifier.

When the RAT module (RATDL layer) receives an indication of a radio access technology (RAT) change, e.g. from GPRS to UMTS, the RATDL layer sends all N-PDUs that have not been confirmed as having been transmitted by the GPRS protocol stack 300a to the UMTS protocol stack 300b.

The implementation of the data packet transfer process through the UMTS protocol stack 300b is now described with reference to FIG. 4.

A first step 500 is identical to step 400 as hereinbefore described.

In a next step 510, since the current cell (for this example) in which the mobile device is located is a UMTS cell, the N-PDU is transferred down the UMTS protocol stack 300b. This commences with the RATDL passing the N-PDU together with its identifier PDU_ID to the PDCP layer.

In a next step 520, the PDCP layer in turn passes the N-PDU with its identifier to the (UMTS) RLC/MAC layer whereafter, at step 530, the RLC/MAC layer transmits the N-PDU to the network 104 if radio conditions permit. If the UMTS RLC/MAC layer is operating in either of the transparent mode or unacknowledged mode then the process proceeds to step 550.

If, however, the RLC/MAC layer is operating in the acknowledged mode, it waits at step 540 for an acknowledgement from the network 104 of receipt of a transmitted packet in accordance with the mechanisms described in the 3GPP specifications. When the network 104 receives the packet it returns an acknowledgement to the RLC/MAC layer.

At step 550, the RLC/MAC layer returns the PDU_ID to the PDCP layer as confirmation of successful transfer by that layer of the N-PDU.

Finally, at step 560, the PDCP layer on receiving the PDU_ID, returns the PDU_ID to the RATDL as confirmation of successful transmission of the N-PDU by the lower layers of the UMTS protocol stack 300b. The RATDL then discards the stored copy of the original PDU as it has been successfully transferred.

When the RATDL layer receives an indication of a radio access technology change from UMTS to GPRS, it sends all stored N-PDUs to the GPRS protocol stack 300a.

It will be understood that the data packet process in accordance with an implementation of the packet transfer process as performed in a preferred embodiment of a mobile device 102, 202 requires some of the functionality of the 3GPP specified protocol (software) layers of the protocol stacks 300a,b to be modified to implement the process such that said existing protocol layers are able to maintain an identifier associated with each N-PDU so that they may confirm to the layer above the successful transfer by that layer of the N-PDU to the layer below.

It will also be appreciated that the process of the present invention is non-trivial since, because the N-PDUs may be processed by protocol layers where they may be segmented, an association between the N-PDUs and their respective segments must be maintained in order to subsequently confirm successful transfer of said N-PDUs by such protocol layers.

Whilst the present invention has been described with respect to a mobile device adapted to operate in both a GSM/GPRS network and a UMTS network and to be switchable therebetween, it will be appreciated that the process of the invention and the means for putting it into effect in a mobile device could be implemented in a dual or multi-mode CDMA wireless environment, for example. Consequently, the foregoing description should not be taken as being limitative of the scope of the present invention.

The packet transfer process of the present invention increases packet volume throughput in a mobile device adapted to operate in a dual mode wireless access network and increases the integrity of the data packet transfer process in said mobile device.

In summary, the invention is directed to a process for transferring data packets through a protocol stack employed by the device for transmitting packets on a packet connection to a wireless network, said wireless network operating at least two, distinct wireless access technologies such as GSM/GPRS and UMTS. The packet transfer process generally comprises each layer of a protocol stack for a currently active packet connection path providing confirmation to a next, higher layer in the stack of successful reception of a data packet from that layer, thereby confirming successful transfer of the data packet through the stack. The first layer of the stack stores a copy of a transferred packet until such time as its receives confirmation from the next, lower layer of successful transfer of the packet of the stack. In the absence of such confirmation and on the occurrence of a switch (hand-off) of the packet connection to a new connection path, particularly one of a different wireless access technology, the stored packet is transferred to the protocol stack to be employed by the wireless device for the new packet connection path. Consequently, the packet transfer process avoids packets being lost on the occurrence of a switch between different technology wireless access packet connection paths.

## Claims

1. A method of transferring data packets in a wireless device (102, 202) capable of being operated in accordance with two wireless access technologies of a wireless network (104), the method comprising the steps of:
storing a copy of a data packet;
transferring said data packet from a first layer (300x) common to respective protocol stacks (300a,b) of two wireless technology paths employed by the device for respective packet connections with the network (104) to a second, lower layer of one of said stacks (300a,b); and
processing said stored copy of the data packet according to an indication from the second layer of safe receipt of the data packet or an indication that a packet connection associated with the packet transfer process is to be terminated or an indication that a packet connection associated with the packet transfer process is to be switched to a new packet connection path, wherein processing said stored copy of the data packet comprises deleting said copy of the packet or transferring it to said new packet connection path.

2. The method of claim 1, wherein the first layer (300x) transfers an identifier (PDU_ID) associated with said data packet to the second, lower layer and wherein said second, lower layer returns the identifier to the first layer (300x) as the indication from the second, lower layer of safe receipt of the data packet thereby confirming successful transfer of the data packet by the first layer to the second, lower layer.

3. The method of claim 2, wherein the transferring and returning steps are performed between each layer and a next, lower layer of the protocol stack (300a,b) employed by the wireless device (102, 202) for a packet connection to the network (104).

4. The method of any one of claims 1 to 3, wherein it further comprises a lower layer of the protocol stack (300a,b) employed by the wireless device for a packet connection with the network (104) segmenting the data packet received from a next, higher layer of the stack to provide smaller packets for transferring to a next, lower layer of the stack and maintaining a correspondence between the smaller packets and the data packet from which they were segmented.

5. The method of claim 4, wherein the lower layer of the protocol stack (300a,b) associates an identifier (SN_PDU_ID) with each of the smaller packets, wherein subsequent receipt by said lower layer from the next, lower layer of all of the smaller packets' identifiers confirms successful transfer of all of said smaller packets to the next, lower layer and triggers said lower layer to return to the next, higher layer an identifier associated with the original data packet.

6. The method of any one of the preceding claims, wherein a first one of the two wireless technology paths is one of a General Packet Radio Service (GPRS) or a Universal Mobile Telecommunications System (UMTS) and a second one of the two wireless technology paths is the other of GPRS or UMTS.

7. The method of any one of the preceding claims, wherein the wireless device (102, 202) is operated in an unacknowledged mode.

8. A wireless device (102, 202) for transferring data packets over a packet connection with a wireless network (104), said device being operable in accordance with two wireless access technologies of the wireless network, comprising:
means (226) for storing a copy of a data packet;
means (238) for transferring said data packet from a first layer (300x) common to respective protocol stacks (300a,b) of two wireless technology paths employed by the device for respective packet connections with the network (104) to a second, lower layer of one of said stacks (300a,b); and
means (238) for processing said stored copy of the data packet according to an indication from the second layer of safe receipt of the data packet or an indication that a packet connection associated with the packet transfer process is to be terminated or an indication that a packet connection associated with the packet transfer process is to be switched to a new packet connection path, wherein processing said stored copy of the data packet comprises deleting said copy of the packet or transferring it to said new packet connection path.

9. The wireless device (102, 202) of claim 8, wherein the first layer (300x) is arranged to transfer an identifier (PDU_ID) associated with said data packet to the second, lower layer and wherein said second, lower layer is arranged to return the identifier to the first layer (300x) as the indication from the second, lower layer of safe receipt of the data packet thereby confirming successful transfer of the data packet by the first layer to the second, lower layer.

10. The wireless device (102, 202) of claim 9, wherein the processing means (238) is arranged to perform the identifier transferring and returning steps between each layer and a next, lower layer of the protocol stack (300a,b) employed by the wireless device (102, 202) for a packet connection to the network (104).

11. The wireless device (102, 202) of any one of claims 8 to 10, wherein a lower layer of the protocol stack (300a,b) employed by the wireless device for a packet connection with the network (104) is arranged to segment the data packet received from a next, higher layer of the stack to provide smaller packets for transferring to a next, lower layer of the stack and to maintain a correspondence between the smaller packets and the data packet from which they were segmented.

12. The wireless device (102, 202) of claim 11, wherein the lower layer of the protocol stack (300a,b) is arranged to associate an identifier (SN_PDU_ID) with each of the smaller packets, wherein subsequent receipt by said lower layer from the next, lower layer of all of the smaller packets' identifiers confirms successful transfer of all of said smaller packets to the next, lower layer and triggers said lower layer to return to the next, higher layer an identifier associated with the original data packet.

13. The wireless device (102, 202) of any one of claims 8 to 12, wherein a first one of the two wireless technology paths is one of a General Packet Radio Service (GPRS) or a Universal Mobile Telecommunications System (UMTS) and a second one of the two wireless technology paths is the other of GPRS or UMTS.

14. The wireless device (102, 202) of any of claims 8 to 13, wherein the device comprises a mobile wireless communications device (102, 202).

15. The wireless device (102, 202) of any one of claims 8 to 14, wherein the wireless device (102, 202) is operable in an unacknowledged mode.

16. A computer readable storage medium containing code means for a wireless device (102, 202) for carrying out the steps of the method of any of one claims 1 to 7.

17. A system comprising an electronic device for transferring packets on a packet connection through a wireless network (104), said wireless network comprising two wireless access networks of different technologies, wherein said device comprises the wireless device (102, 202) of any one of claims 8 to 15.

## Patentansprüche

1. Ein Verfahren zur Datenübertragung innerhalb eines drahtlosen Gerätes (102, 202), das in der Lage ist, entsprechend zwei Drahtloszugangstechnologien eines Drahtlosnetzwerks (104) betrieben zu werden, wobei das Verfahren die folgenden Schritte umfasst:
das Speichern einer Kopie eines Datenpakets;
das Übertragen des Datenpakets von einer ersten Schicht (300x), die die entsprechenden Protokollstapel (300a,b) von zwei Drahtlostechnologiepfaden gemeinsam haben, welche durch das Gerät für die entsprechenden Paketverbindungen mit dem Netzwerk (104) genutzt werden, zu einer zweiten, niedrigeren Schicht von einem der Stapel (300a,b); und
das Verarbeiten der gespeicherten Kopie des Datenpakets entsprechend einer Anzeige von der zweiten Schicht über den sicheren Empfang des Datenpakets oder einer Anzeige, dass eine mit dem Paketübertragungsprozess assoziierte Paketverbindung beendet werden soll, oder einer Anzeige, dass eine mit dem Paketübertragungsprozess assoziierte Paketverbindung zu einem neuen Paketverbindungspfad umgeschaltet werden soll, wobei die Verarbeitung der gespeicherten Kopie des Datenpakets das Löschen der Kopie des Pakets oder deren Übertragung zu dem neuen Paketverbindungspfad umfasst.

2. Das Verfahren gemäß Anspruch 1, wobei die erste Schicht (300x) eine mit dem Datenpaket assoziierte Kennung (PDU_ID) zur zweiten, niedrigeren Schicht überträgt und wobei diese zweite, niedrigere Schicht die Kennung an die erste Schicht (300x) als die Anzeige von der zweiten, niedrigeren Schicht über den sicheren Empfang des Datenpakets zurückgibt, wodurch die erfolgreiche Übertragung des Datenpakets durch die erste Schicht zur zweiten, niedrigeren Schicht bestätigt wird.

3. Das Verfahren gemäß Anspruch 2, wobei die Schritte des Übertragens und des Zurückgebens zwischen jeder Schicht und einer nächsten, niedrigeren Schicht des Protokollstapels (300a,b) durchgeführt werden, der durch das drahtlose Gerät (102, 202) für eine Paketverbindung zu dem Netzwerk (104) genutzt wird.

4. Das Verfahren gemäß jedem der Ansprüche 1 bis 3, wobei es ferner umfasst, dass eine niedrigere Schicht des Protokollstapels (300a,b), der durch das drahtlose Gerät für eine Paketverbindung mit dem Netzwerk (104) genutzt wird, die Segmentierung des von einer nächsten, höheren Schicht des Stapels empfangenen Datenpakets vornimmt, um kleinere Pakete zur Übertragung zu einer nächsten, niedrigeren Schicht des Stapels bereitzustellen, sowie eine Zuordnung zwischen den kleineren Paketen und dem Datenpaket unterhält, aus dem sie segmentiert wurden.

5. Das Verfahren gemäß Anspruch 4, wobei die niedrigere Schicht des Protokollstapels (300a,b) mit jedem der kleineren Pakete eine Kennung (SN_PDU_ID) assoziiert, wobei der nachfolgende Empfang aller Kennungen der kleineren Pakete durch die niedrigere Schicht von der nächsten, niedrigeren Schicht die erfolgreiche Übertragung von allen der kleineren Pakete zu der nächsten, niedrigeren Schicht bestätigt und bei dieser niedrigeren Schicht auslöst, dass sie an die nächste, höhere Schicht eine Kennung zurückgibt, die mit dem ursprünglichen Datenpaket assoziiert ist.

6. Das Verfahren gemäß jedem der vorherigen Ansprüche, wobei ein erster der beiden Drahtlostechnologiepfade entweder ein General Packet Radio Service (GRPS) oder ein Universal Mobile Telecommunications System (UMTS) ist und ein zweiter der beiden Drahtlostechnologiepfade der jeweils andere von GPRS bzw. UMTS ist.

7. Das Verfahren gemäß jedem der vorherigen Ansprüche, wobei das drahtlose Gerät (102, 202) in einem Unacknowledged-Modus betrieben wird.

8. Ein drahtloses Gerät (102, 202) zur Übertragung von Datenpaketen über eine Paketverbindung mit einem Drahtlosnetzwerk (104), wobei das Gerät entsprechend zwei Drahtloszugangstechnologien des Drahtlosnetzwerks betrieben werden kann, umfassend:
Mittel (226) zum Speichern einer Kopie eines Datenpakets;
Mittel (238) zum Übertragen des Datenpakets von einer ersten Schicht (300x), die die entsprechenden Protokollstapel (300a,b) von zwei Drahtlostechnologiepfaden gemeinsam haben, welche durch das Gerät für die entsprechenden Paketverbindungen mit dem Netzwerk (104) genutzt werden, zu einer zweiten, niedrigeren Schicht von einem der Stapel (300a,b); und
Mittel (238) zum Verarbeiten der gespeicherten Kopie des Datenpakets entsprechend einer Anzeige von der zweiten Schicht über den sicheren Empfang des Datenpakets oder einer Anzeige, dass eine mit dem Paketübertragungsprozess assoziierte Paketverbindung beendet werden soll, oder einer Anzeige, dass eine mit dem Paketübertragungsprozess assoziierte Paketverbindung zu einem neuen Paketverbindungspfad umgeschaltet werden soll, wobei die Verarbeitung der gespeicherten Kopie des Datenpakets das Löschen der Kopie des Pakets oder deren Übertragung zu dem neuen Paketverbindungspfad umfasst.

9. Das drahtlose Gerät (102, 202) gemäß Anspruch 8, wobei die erste Schicht (300x) so eingerichtet ist, dass sie eine mit dem Datenpaket assoziierte Kennung (PDU_ID) zur zweiten, niedrigeren Schicht überträgt, und wobei diese zweite, niedrigere Schicht so eingerichtet ist, dass sie die Kennung an die erste Schicht (300x) als die Anzeige von der zweiten, niedrigeren Schicht über den sicheren Empfang des Datenpakets zurückgibt, wodurch die erfolgreiche Übertragung des Datenpakets durch die erste Schicht zur zweiten, niedrigeren Schicht bestätigt wird.

10. Das drahtlose Gerät (102, 202) gemäß Anspruch 9, wobei die Mittel zur Verarbeitung (238) so eingerichtet sind, dass sie die Schritte des Übertragens und des Zurückgebens der Kennung zwischen jeder Schicht und einer nächsten, niedrigeren Schicht des Protokollstapels (300a,b) durchführen, der durch das drahtlose Gerät (102, 202) für eine Paketverbindung zu dem Netzwerk (104) genutzt wird.

11. Das drahtlose Gerät (102, 202) gemäß jedem der Ansprüche 8 bis 10, wobei eine niedrigere Schicht des Protokollstapels (300a,b), der durch das drahtlose Gerät für eine Paketverbindung mit dem Netzwerk (104) genutzt wird, so eingerichtet ist, dass sie die Segmentierung des von einer nächsten, höheren Schicht des Stapels empfangenen Datenpakets vornimmt, um kleinere Pakete zur Übertragung zu einer nächsten, niedrigeren Schicht des Stapels bereitzustellen, und dass sie eine Zuordnung zwischen den kleineren Paketen und dem Datenpaket unterhält, aus dem sie segmentiert wurden.

12. Das drahtlose Gerät (102, 202) gemäß Anspruch 11, wobei die niedrigere Schicht des Protokollstapels (300a,b) so eingerichtet ist, dass sie mit jedem der kleineren Pakete eine Kennung (SN_PDU_ID) assoziiert, wobei der nachfolgende Empfang aller Kennungen der kleineren Pakete durch die niedrigere Schicht von der nächsten, niedrigeren Schicht die erfolgreiche Übertragung von allen der kleineren Pakete zu der nächsten, niedrigeren Schicht bestätigt und bei dieser niedrigeren Schicht auslöst, dass sie an die nächste, höhere Schicht eine Kennung zurückgibt, die mit dem ursprünglichen Datenpaket assoziiert ist.

13. Das drahtlose Gerät (102, 202) gemäß jedem der Ansprüche 8 bis 12, wobei ein erster der beiden Drahtlostechnologiepfade entweder ein General Packet Radio Service (GRPS) oder ein Universal Mobile Telecommunications System (UMTS) ist und ein zweiter der beiden Drahtlostechnologiepfade der jeweils andere von GPRS bzw. UMTS ist.

14. Das drahtlose Gerät (102, 202) gemäß jedem der Ansprüche 8 bis 13, wobei das Gerät ein mobiles drahtloses Kommunikationsgerät (102, 202) umfasst.

15. Das drahtlose Gerät (102, 202) gemäß jedem der Ansprüche 8 bis 14, wobei das drahtlose Gerät (102, 202) in einem Unacknowledged-Modus betrieben werden kann.

16. Ein computerlesbares Speichermedium, das Codemittel für ein drahtloses Gerät (102, 202) zur Durchführung der Schritte des Verfahrens gemäß jedem der Ansprüche 1 bis 7 enthält.

17. Ein System, umfassend eine elektronische Vorrichtung zur Übertragung von Paketen auf einer Paketverbindung über ein Drahtlosnetzwerk (104), wobei das Drahtlosnetzwerk zwei Drahtloszugangsnetzwerke mit unterschiedlichen Technologien umfasst, wobei die Vorrichtung das drahtlose Gerät (102, 202) gemäß jedem der Ansprüche 8 bis 15 umfasst.

## Revendications

1. Procédé de transfert de paquets de données dans un dispositif sans fil (102, 202) pouvant être opéré conformément à deux technologies d'accès sans fil d'un réseau sans fil (104), le procédé comprenant les étapes suivantes :
stockage d'une copie d'un paquet de données ;
transfert dudit paquet de données d'une première couche (300x) commune à des piles de protocoles respectives (300a,b) de deux chemins de technologie sans fil utilisés par le dispositif pour des connexions de paquets respectives avec le réseau (104), à une deuxième couche inférieure de l'une desdites piles (300a,b) ; et
traitement de ladite copie stockée du paquet de données conformément à une indication de bonne réception du paquet de données provenant de la deuxième couche ou une indication selon laquelle une connexion de paquets associée au processus de transfert de paquets doit être interrompue ou une indication selon laquelle une connexion de paquets associée au processus de transfert de paquets doit être commutée vers un nouveau chemin de connexion de paquets, dans lequel le traitement de ladite copie stockée du paquet de données comprend la suppression de ladite copie du paquet ou le transfert de celle-ci vers ledit nouveau chemin de connexion de paquets.

2. Procédé selon la revendication 1, dans lequel la première couche (300x) transfère un identificateur (PDU_ID) associé audit paquet de données, à la deuxième couche inférieure et dans lequel ladite deuxième couche inférieure renvoie l'identificateur à la première couche (300x) afin d'indiquer la bonne réception du paquet de données par la deuxième couche inférieure et confirmer ainsi le bon transfert du paquet de données de la première couche à la deuxième couche inférieure.

3. Procédé selon la revendication 2, dans lequel les étapes de transfert et de renvoi sont réalisées entre chaque couche et une couche inférieure la plus proche de la pile de protocoles (300a,b) utilisée par le dispositif sans fil (102, 202) pour une connexion de paquets vers le réseau (104).

4. Procédé selon l'une quelconque des revendications 1 à 3, dans lequel il existe en outre une couche inférieure de la pile de protocoles (300a,b) utilisée par le dispositif sans fil pour une connexion de paquets avec le réseau (104) qui segmente le paquet de données provenant d'une couche supérieure la plus proche de la pile en paquets plus petits afin de les transférer à une couche inférieure la plus proche de la pile et de maintenir une correspondance entre les paquets plus petits et le paquet de données à partir duquel ils ont été segmentés.

5. Procédé selon la revendication 4, dans lequel la couche inférieure de la pile de protocoles (300a,b) associe un identificateur (SN_PDU_ID) à chacun des paquets plus petits, dans lequel la réception ultérieure de tous les identificateurs des paquets plus petits par ladite couche inférieure en provenance de la couche inférieure la plus proche confirme le bon transfert de tous lesdits paquets plus petits à la couche inférieure la plus proche et amène ladite couche inférieure à renvoyer à la couche supérieure la plus proche un identificateur associé au paquet de données original.

6. Procédé selon l'une quelconque des revendications précédentes, dans lequel un premier des deux chemins de technologie sans fil est un chemin de technologie GPRS (General Packet Radio Service) ou UMTS (Universal Mobile Telecommunications System) et le deuxième des deux chemins de technologie sans fil est un chemin de l'autre technologie, GPRS ou UMTS.

7. Procédé selon l'une quelconque des revendications précédentes, dans lequel le dispositif sans fil (102, 202) opère dans un mode non acquitté.

8. Dispositif sans fil (102, 202) permettant de transférer des paquets de données à un réseau sans fil (104) par l'intermédiaire d'une connexion de paquets, ledit dispositif pouvant être opéré conformément à deux technologies d'accès sans fil du réseau sans fil, comprenant :
des moyens (226) de stocker une copie d'un paquet de données ;
des moyens (238) de transférer ledit paquet de données d'une première couche (300x) commune à des piles de protocoles respectives (300a,b) de deux chemins de technologie sans fil utilisés par le dispositif pour des connexions de paquets respectives avec le réseau (104), à une deuxième couche inférieure de l'une desdites piles (300a,b) ; et
des moyens (238) de traiter ladite copie stockée du paquet de données conformément à une indication de bonne réception du paquet de données provenant de la deuxième couche ou une indication selon laquelle une connexion de paquets associée au processus de transfert de paquets doit être interrompue ou une indication selon laquelle une connexion de paquets associée au processus de transfert de paquets doit être commutée vers un nouveau chemin de connexion de paquets, dans lequel le traitement de ladite copie stockée du paquet de données comprend la suppression de ladite copie du paquet ou le transfert de celle-ci vers ledit nouveau chemin de connexion de paquets.

9. Dispositif sans fil (102, 202) selon la revendication 8, dans lequel la première couche (300x) est disposée de telle sorte qu'elle transfère un identificateur (PDU_ID) associé audit paquet de données, à la deuxième couche inférieure et dans lequel ladite deuxième couche inférieure est disposée de telle sorte qu'elle renvoie l'identificateur à la première couche (300x) afin d'indiquer la bonne réception du paquet de données par la deuxième couche inférieure et confirmer ainsi le bon transfert du paquet de données de la première couche à la deuxième couche inférieure.

10. Dispositif sans fil (102, 202) selon la revendication 9, dans lequel les moyens de traitement (238) sont disposés de telle sorte qu'ils réalisent les étapes de transfert et de renvoi de l'identificateur entre chaque couche et une couche inférieure la plus proche de la pile de protocoles (300a,b) utilisée par le dispositif sans fil (102, 202) pour une connexion de paquets vers le réseau (104).

11. Dispositif sans fil (102, 202) selon l'une quelconque des revendications 8 à 10, dans lequel une couche inférieure de la pile de protocoles (300a,b) utilisée par le dispositif sans fil pour une connexion de paquets avec le réseau (104) est disposée de telle sorte qu'elle segmente le paquet de données provenant d'une couche supérieure la plus proche de la pile en paquets plus petits afin de les transférer à une couche inférieure la plus proche de la pile et de maintenir une correspondance entre les paquets plus petits et le paquet de données à partir duquel ils ont été segmentés.

12. Dispositif sans fil (102, 202) selon la revendication 11, dans lequel la couche inférieure de la pile de protocoles (300a,b) est disposée de telle sorte qu'elle associe un identificateur (SN_PDU_ID) à chacun des paquets plus petits, dans lequel la réception ultérieure de tous les identificateurs des paquets plus petits par ladite couche inférieure en provenance de la couche inférieure la plus proche confirme le bon transfert de tous lesdits paquets plus petits à la couche inférieure la plus proche et amène ladite couche inférieure à renvoyer à la couche supérieure la plus proche un identificateur associé au paquet de données original.

13. Dispositif sans fil (102, 202) selon l'une quelconque des revendications 8 à 12, dans lequel un premier des deux chemins de technologie sans fil est un chemin de technologie GPRS (General Packet Radio Service) ou UMTS (Universal Mobile Telecommunications System) et le deuxième des deux chemins de technologie sans fil est un chemin de l'autre technologie, GPRS ou UMTS.

14. Dispositif sans fil (102, 202) selon l'une quelconque des revendications 8 à 13, dans lequel le dispositif comprend un dispositif de communications mobiles sans fil (102, 202).

15. Dispositif sans fil (102, 202) selon l'une quelconque des revendications 8 à 14, dans lequel le dispositif sans fil (102, 202) peut opérer dans un mode non acquitté.

16. Support de stockage lisible par ordinateur contenant des moyens de code pour un dispositif sans fil (102, 202) permettant d'exécuter les étapes du procédé selon l'une quelconque des revendications 1 à 7.

17. Système comprenant un dispositif électronique permettant de transférer des paquets sur une connexion de paquets par l'intermédiaire d'un réseau sans fil (104), ledit réseau sans fil comprenant deux réseaux d'accès sans fil de différentes technologies, dans lequel ledit dispositif comprend le dispositif sans fil (102, 202) selon l'une quelconque des revendications 8 à 15.
